(19) Europäisches Patentamt
European Patent Office
Office européen des brevets

(11) Publication number: 0 283 821 B1

(12) EUROPEAN PATENT SPECIFICATION

(45) Date of publication of patent specification:
24.07.91 Bulletin 91/30

(51) Int. Cl.⁵: B60K 17/34, F16D 25/00

(21) Application number: 88103521.6

(22) Date of filing: 07.03.88

(54) Torque transmission device for a four-wheel drive vehicle.

(30) Priority: 27.03.87 JP 75240/87
05.10.87 JP 251305/87
27.11.87 JP 297390/87
27.11.87 JP 297391/87
26.11.87 JP 331690/87

(43) Date of publication of application:
28.09.88 Bulletin 88/39

(45) Publication of the grant of the patent:
24.07.91 Bulletin 91/30

(84) Designated Contracting States:
DE FR GB IT SE

(56) References cited:
EP-A- 0 202 951
DE-A- 3 545 540
DE-A- 3 706 075
GB-A- 2 163 107
GB-A- 2 171 967
US-A- 4 369 671
PATENT ABSTRACTS OF JAPAN, unexamined
applications, M section, vol. 10, no. 122, May 7,
1986; THE PATENT OFFICE JAPANESE GOV-
ERNMENT, p. 161 M 476

(73) Proprietor: TOYODA KOKI KABUSHIKI
KAISHA
1-1, Asahi-machi
Kariya-shi Aichi-ken (JP)

(72) Inventor: Tomita, Tamaki
3, Kuribayashi Myodaiji-cho
Okazaki-shi Aichi-ken (JP)
Inventor: Asano, Hiroaki
2-11-6, Umezono-cho
Okazaki-shi Aichi-ken (JP)
Inventor: Nakamura, Keiichi
1-30, Noda-cho
Kariya-shi Aichi-ken (JP)
Inventor: Yamamoto, Masaji
1-25, Anada Miai-cho
Okazaki-shi Aichi-ken (JP)
Inventor: Tnooka, Shigeo
25, Syamoto Tominaga-cho
Okazaki-shi Aichi-ken (JP)
Inventor: Sakai, Toshifumi
7-2, Baba Kouda-cho Nukata-gun
Aichi-ken (JP)
Inventor: Nakano, Tetsuya
1-18, Shiroyama Miki-cho
Okazaki-shi Aichi-ken (JP)
Inventor: Morishita, Nobunao
11-21, Hinahon-machi
Okazaki-shi Aichi-ken (JP)

(74) Representative: Wächtershäuser, Günter, Dr.
Tal 29
W-8000 München 2 (DE)

## Description

## BACKGROUND OF THE INVENTION

Field of the Invention :

The present invention relates to a device for transmitting rotational torque between front and rear wheels in a four-wheel drive vehicle.

Discussion of the Prior Art :

As disclosed in Japanese unexamined patent publication No. 60-252026 for example, there has been known a four-wheel drive vehicle of the type that a conventional oil pump is driven upon occurrence of the rotational speed difference between two coaxial drive shafts respectively connected to front and rear wheels and that a hydraulically operated clutch for effecting selective driving connection between the two drive shafts is operated in response to the discharge pressure from the oil pump corresponding to the rotational speed difference.

In a torque transmission device for the known four-wheel drive vehicle, the oil pump of plunger or vane type is interposed between the front and rear wheel drive shafts so as to discharge oil of the pressure corresponding to the rotational speed difference between the drive shafts. The pressurized oil from the pump is admitted into a cylinder chamber of the hydraulic clutch through a fluid passage formed in one of the drive shafts, so that the clutch can be hydraulically operated to drivingly connect the drive shafts with each other.

However, in the torque transmission device of the aforementioned type, the conventional oil pump interconnected between the front and rear drive shafts is relatively large in axial width thereof, and the fluid passage has to be provided for admitting the discharge pressure from the oil pump into the hydraulic clutch. This disadvantageously results in a complicated and large construction of the torque transmission device as well as in an increased cost for manufacturing.

## SUMMARY OF THE INVENTION

Accordingly, it is a primary object of the present invention to provide an improved torque transmission device for a four-wheel drive vehicle in which a pressure generation means for actuating a clutch operating piston can be made small in size as well as in weight.

Another object of the present invention is to provide an improved torque transmission device for a four-wheel drive vehicle in which an axially narrow or thin rotor can be used as a pressure generation means for actuating a clutch operating piston, thereby minimizing the entire size and weight of the device.

Still another object of the present invention is to provide an improved torque transmission device of the character set forth above wherein the torque transmission character thereof can be easily tuned up.

Yet another object of the present invention is to provide an improved torque transmission device of the character set forth above wherein the transmissive torque thereby can be controlled depending upon driving conditions of the vehicle.

A further object of the present invention is to provide an improved torque transmission device for a four-wheel drive vehicle wherein the flexing of blade portions of a pressure generating rotor can be minimized thereby avoiding local abrasion of the rotor and the end surfaces on which the rotor frictionally slides.

A still further object of the present invention is to provide an improved torque transmission device for a four-wheel drive vehicle wherein the force to press multiple outer and inner clutch discs is mechanically augmented when the rotational speed·difference between the outer and inner clutch discs exceeds a predetermined speed, thereby preventing the clutch discs from suffering from excessive abrasion.

An additional object of the present invention is to provide an improved torque transmission device for a four-wheel drive vehicle wherein the relative rotation between a rotary housing and a clutch operating piston received therein can be restricted without using any pin member, thereby obviating the failure to assemble any such pin member into the device.

An yet additional object of the present invention is to provide an improved torque transmission device for a four-wheel drive vehicle in which the thermal changes in volume of a lubricant filled within a clutch disc chamber can be reliably absorbed, thereby maintaining the clutch disc chamber completely isolated from the atmosphere.

Briefly, in a torque transmission device for a four-wheel drive vehicle according to the present invention, a rotary housing and a rotary shaft are respectively connected to one and the other of front and rear drive shafts which are rotatable about a common axis for transmitting rotational power to front and rear axles of the vehicle. A multiple disc clutch is incorporated in the rotary housing, with several outer discs being rotatable with the rotary housing and several inner discs being arranged in alternate fashion with the outer discs to be rotatable bodily with the rotary shaft. A piston is axially movably received within the rotary housing to press the clutch discs at one axial end thereof. The other axial end of the piston, together with the housing, defines an axially narrow circular rotor chamber, within which a rotor having a plurality of radially extending blade portions is received for rotation bodily with the rotary shaft. The blade portions divides the rotor chamber into plural space sections, in each of which a high viscous fluid is filled. When the rotor rotates relative to the rotary housing due to the rotational speed difference between the front and rear drive shafts, a pressure is generated within each of the space sections, which causes the piston to press the clutch discs. Thus, the outer and inner clutch discs are brought into driving connection, so that rotational torque is transmitted from one of the front and rear drive shafts and vice versa.

With this configuration, because the use of the high viscous fluid permits the piston to be axially narrow and because a pressure generation chamber within which the rotor rotates and a pressure chamber for the piston share a common space, the transmission device can be made small in size. Further, since the piston exposes the other end surface thereof to pressure within the pressure generation chamber (i.e., the rotor chamber), no communication passage is required to fluidcally connect the pressure generation chamber to the piston chamber, contrary to the known device which uses a conventional hydraulic pump and a separate cylinder device.

## BRIEF DESCRIPTION OF THE ACCOMPANYING DRAWINGS

The foregoing and other objects, features and many of the attendant advantages of the present invention will be readily appreciated as the same becomes better understood by reference to the following detailed description of the preferred embodiments, wherein like reference numerals designate identical or corresponding parts throughout the several views, and in which :

FIGURE 1 is a schematic view of a drive system for a four-wheel drive vehicle incorporating a torque transmission device according to the present invention ;

FIGURE 2 is a longitudinal sectional view of the torque transmission device constituting a first embodiment ;

FIGURE 3 is a cross-sectional view of the device taken along the line III-III in FIGURE 2 ;

FIGURE 4 is another cross-sectional view taken along the same line as FIGURE 3, but constituting a second embodiment of the present invention ;

FIGURE 5 is a longitudinal sectional view of a third embodiment of the torque transmission device according to the present invention ;

FIGURE 6 is a cross-sectional view taken along the line VI-VI in FIGURE 5 ;

FIGURE 7 is a graph showing a transmissive torque characteristic of the second and third embodiments ;

FIGURE 8 is a longitudinal sectional view of the torque transmission device constituting a fourth embodiment of the present invention, also showing a block diagram of a control circuit therefor ;

FIGURE 9 is a cross-sectional view taken along the line IX-IX in FIGURE 8 ;

FIGURE 10 is a graph showing the torque transmissive characteristic of the fourth embodiment ;

FIGURE 11 is a cross-sectional view of another torque transmission device constituting a fifth embodiment of the present invention ;

FIGURE 12 is a fragmentary sectional view taken along the line XII-XII in FIGURE 11 ;

FIGURE 13 is a cross-sectional view of still another torque transmission device constituting a sixth embodiment of the present invention ;

FIGURE 14 is a cross-sectional view of a further torque transmission device constituting an eighth embodiment ;

FIGURE 15 is a cross-sectional view of a ninth embodiment according to the present invention ;

FIGURE 16 is a fragmentary sectional view taken along the line XVI-XVI in FIGURE 15 ;

FIGURE 17 is a longitudinal sectional view of a tenth embodiment of the present invention ;

FIGURE 18 is an enlarged fragmentary view of a portion shown in FIGURE 17 ;

FIGURE 19 is a graph showing a transmissive torque characteristic of the tenth embodiment ;

FIGURE 20 is a longitudinal sectional view of an eleventh embodiment of the present invention ;

FIGURE 21 is a longitudinal sectional view of a twelfth embodiment of the present invention ;

FIGURE 22 is a cross-sectional view taken along the line XXII-XXII in FIGURE 21 ;

FIGURE 23 is a longitudinal sectional view of a thirteenth embodiment of the present invention ;

FIGURE 24 is a longitudinal sectional view of a fourteenth embodiment of the present invention ; and

FIGURE 25 is a longitudinal sectional view of a fifteenth embodiment of the present invention.

## DETAILED DESCRIPTION OF THE PREFERRED EMBODIMENTS

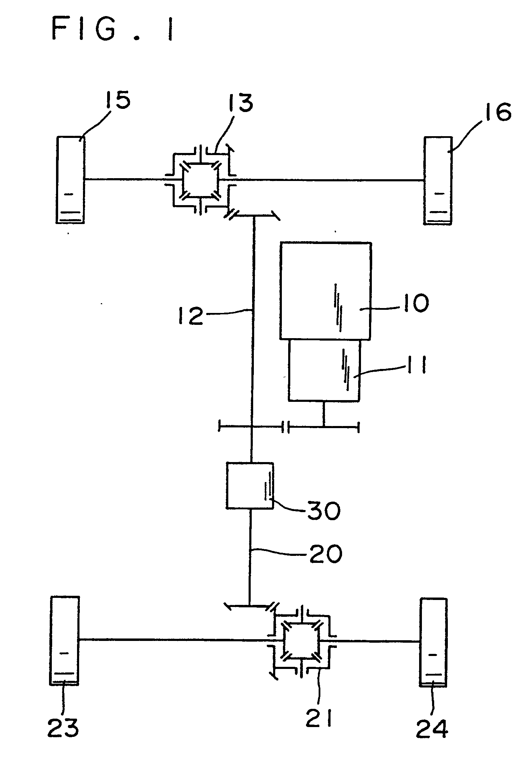

Referring now to FIGURE 1, there is schematically shown a drive system of a four-wheel drive vehicle comprising an engine 10, which transmits the rotational power to a front drive shaft 12 through a transmission 11. The rotation of the shaft 12 is in turn transmitted to left and right front wheels 15, 16 through a front axle including a front differential unit 13. The front drive shaft 12 is drivingly connected to a rear drive shaft 20 through a torque transmission device 30 according to the present invention which is constructed as referred to later. The rotational torque transmitted to the rear drive shaft 20 is further transmitted to left and right rear wheels 23, 24 through a rear axle including a rear differential unit 21. Various embodiments of the torque transmission device 30 will be described hereinafter.

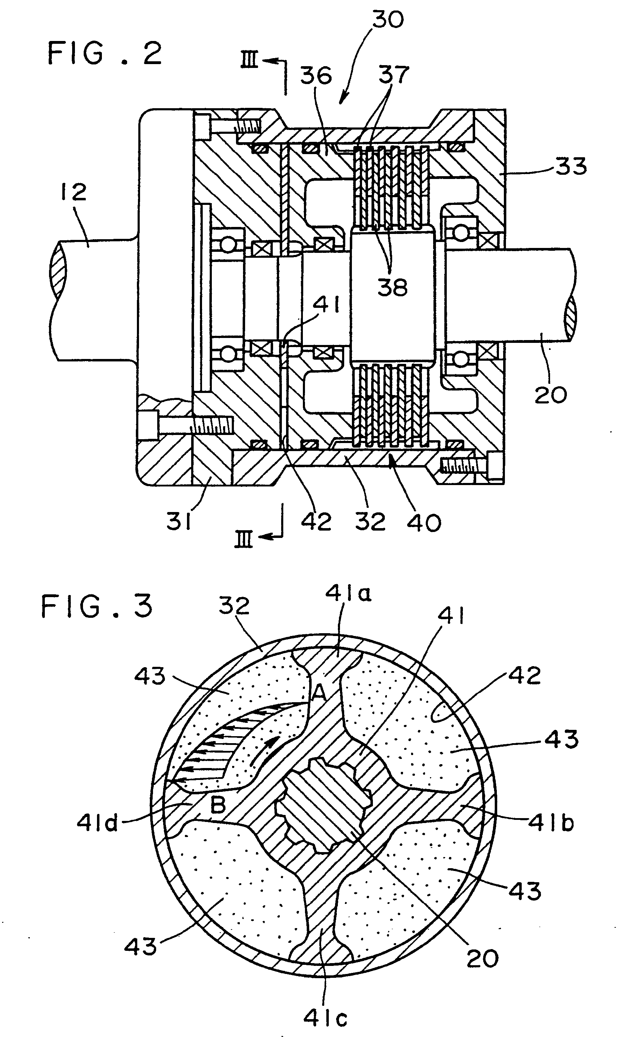

Referring now to FIGURE 2 showing a first embodiment of the present invention, reference numeral 31 denotes a front end cap 31 connected to one end of the front drive shaft 12. A cylindrical rotary housing 32 provided coaxially with the front drive shaft 12 is secured to the front end cap 31 at one end and to a rear end cap 33 at the other end. The end caps 31, 33 rotatably carries one end portion of the rear drive shaft 20 through a pair of bearings (not numbered) in coaxial relation with the front drive shaft 12.

A plurality of outer clutch discs 37 are spline-engaged with an internal surface of the rotary housing 32, while a plurality of inner clutch discs 38 are spline-engaged with an external surface portion of the rear drive shaft 20. The outer and inner clutch discs 37, 38 are arranged in alternate fashion, thereby constituting a multiple disc clutch 40. The rotary housing 32 slidably receives a clutch operating piston 36 between the front end cap 31 and the multiple disc clutch 40. The pressure acting on the piston 36 moves the same to press the clutch discs 37, 38. Thus, a drive torque applied to the rotary housing 32 from the front drive shaft 12 is transmitted to the rear drive shaft 20 through the clutch discs 37, 38. The torque so transmitted to the rear drive shaft 20 varies depending on the pressure acting on the piston 36.

Between the facing end surfaces of the front end cap 31 and the piston 36, there is defined a circular rotor chamber 42, within which a thin impeller or rotor 41 of approximately the same axial width (e.g., 2 or 3 millimeters) as that of the chamber 42 is received with opposite end surfaces thereof being slidable on the facing end surfaces of the front end cap 31 and the piston 36. As shown in FIGURE 3, the rotor 41 is spline-connected at its central portion with the external surface of the rear drive shaft 20 and is provided with a plurality (four in this embodiment) of blade portions 41a-41d which radially extend at regular intervals in circumferential direction. External end surfaces of the blade portions 41a-41d are in slidable contact with the internal surface of the rotary housing 32, thereby constituting sealing portions. Thus, the rotor chamber 42 between the piston 36 and the front end cap 31 is circumferentially divided by the blade portions 41a-41d into four space sections 43, within which high viscous fluid is filled.

Preferably, silicon oil having kinematic viscosity of 100 thousands centistokes may be used as the high viscous fluid to be filled up to 90% in volume of each of the space sections 43. Further, the rotor 41 has an axial clearance of 0.1-0.65 mm (millimeter) at either side relative to the front end cap 31 and the piston 36 and a radial clearance of 0.05-0.025 mm at each of the external end surface relative to the internal surface of the rotary housing 32. Normally, the axial clearance between any adjacent two of the clutch discs 37, 38 is set in the range of 0-0.1 millimeter, and those at the axial opposite axial sides of the clutch discs 37, 38 are maintained in friction contact with the piston 36 and the rear end cap 33. However, the piston 36 is axially moved 0.1 millimeter to press the clutch discs 37, 38 when torque of a magnitude, e.g., 20 kg-cm (kilogrammeters) is transmitted between the front and rear drive shafts 12, 20. It should be realized that the aforementioned numerical data vary depending upon the torque required to be transmitted and are recited for the sake of exemplification.

Operation of the apparatus as constructed above will be described hereinafter. When the relative rotation between the front and rear drive shafts 12, 20 causes the rotor 41 to rotate relative to the rotary housing 32, the high viscous oil filled within each of the space sections 43 is compulsorily moved between two close end surfaces of the piston 36 and the front end cap 31 at the velocity corresponding to the rotational speed difference. At this time, a pressure is generated within each of the space sections 43 due to friction of the high viscous oil with the two close end surfaces which rotate bodily with the rotary housing 32. More specifically, assuming now that an area right behind a preceding blade portion and an area right before another blade portion following the same are respectively named as A and B, there occurs a pressure distribution which has the highest pressure at the area B and the lowest pressure at the area A, as depicted in FIGURE 3, when the rotor 41 rotates in a clockwise direction. The pressure generated within each of the space sections 43 is proportional to the rotational speed difference between the rotor 41 and the rotary housing 32. Since the pressure so generated directly acts on the piston 36, the multiple clutch discs 37, 38 are pressed on each other, whereby the rotational torque from the front drive shaft 12 is transmitted to the rear drive shaft 20 through the multiple clutch discs 37, 38.

Accordingly, when a large rotational speed difference occurs between the front and rear drive shafts 12, 20 due to the slippage of the front wheels 15, 16 or the rear wheels 23, 24 as is true in the case that the vehicle travels on roads of a small coefficient of friction such as muddy roads, snow covered roads, etc., the pressure generated within the space sections 43 increases thereby to assure the four wheel driving. On the other hands, when the vehicle turns at corners of well-conditioned roads, a small rotational speed difference occurs between the front and rear drive shafts 12, 20. This permits the outer and inner clutch discs 37, 38 to slip with each other, whereby the occurrence of braking phenomenon at tight corners can be avoided.

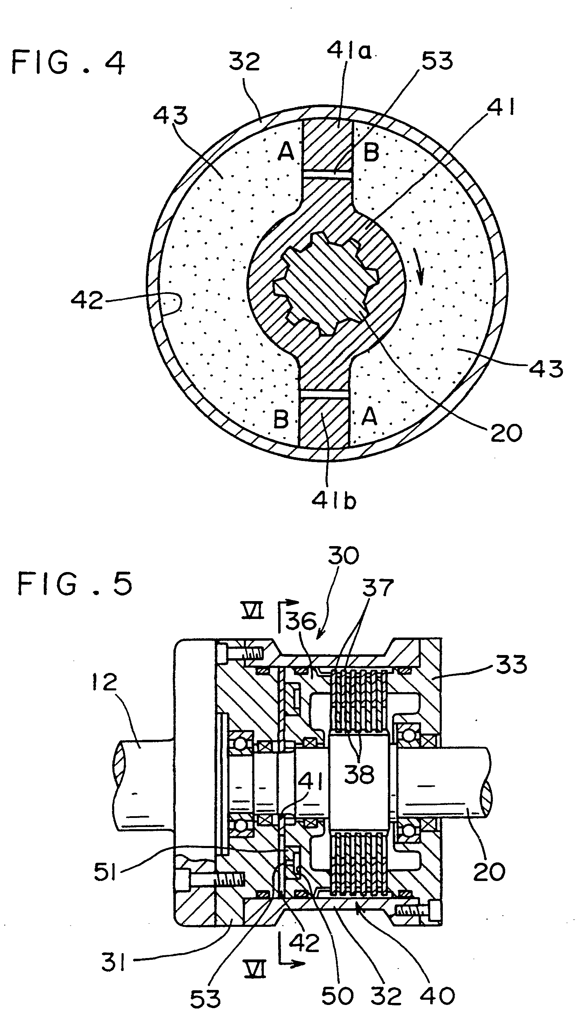

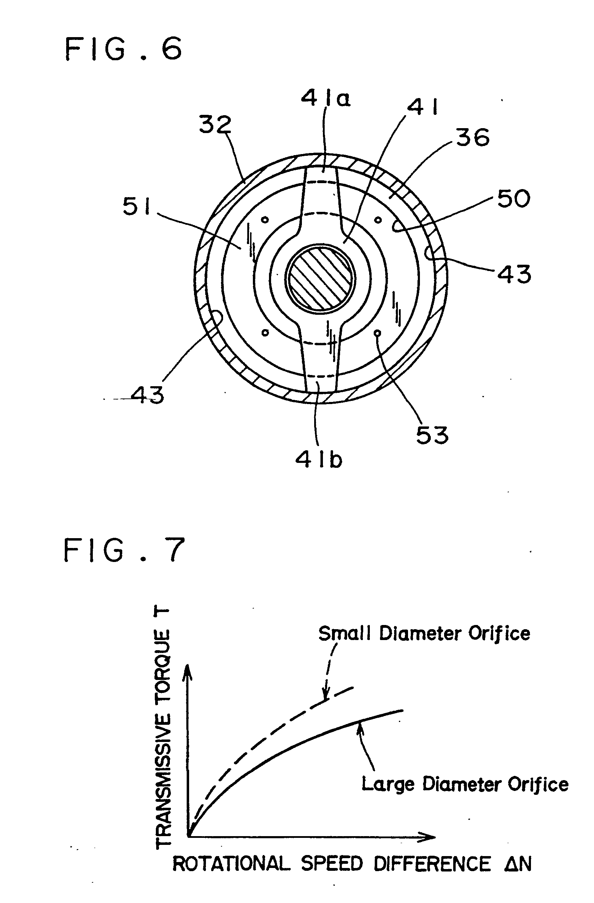

FIGURES 4 to 7 show second and third embodiments of the present invention, wherein the torque transmission device as described above is improved in that means is provided for tuning up the torque transmission characteristic. In the second embodiment shown in FIGURE 4, a throttle hole or orifice 53 is formed in each of two blade portions 41a, 41b of the rotor 41 so that a pressure is relieved from the high pressure area B right before each of the blade portions 41a-41b to the low pressure area A right behind the same blade portion. Thus, by varying the diameter of the orifice 53, the pressure generated within each of two space sections 43 is adjusted, so that the force of the piston 36 pressing the clutch discs 37, 38 and hence the transmissive torque can be tuned up by varying the diameter of the orifices 53, as shown in FIGURE 7.

The same effect as in the second embodiment can be achieved by the third embodiment shown in FIGURES 5 and 6. In this embodiment, an annular groove 50 is formed at one end surface of the piston 36 which faces the rotor 41, and an annular plate 51 is tightly fitted in the annular groove 50 to constitute an annular channel (not numbered) in the piston 36. A plurality (preferably, four) of orifices 53 are formed in the annular plate 51 at a regular circumferential interval each for communication with the rotor chamber 42 and the annular channel in the piston 36.

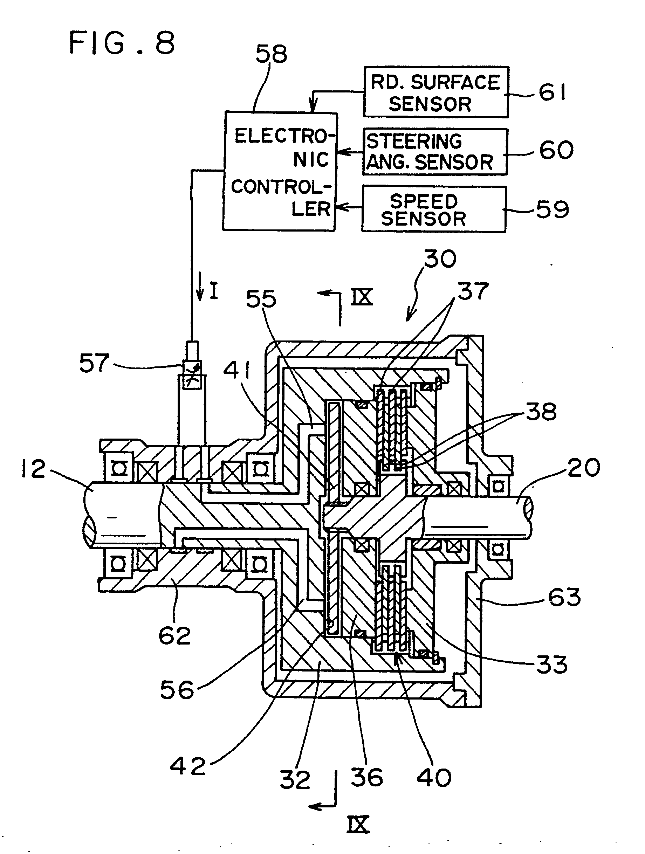

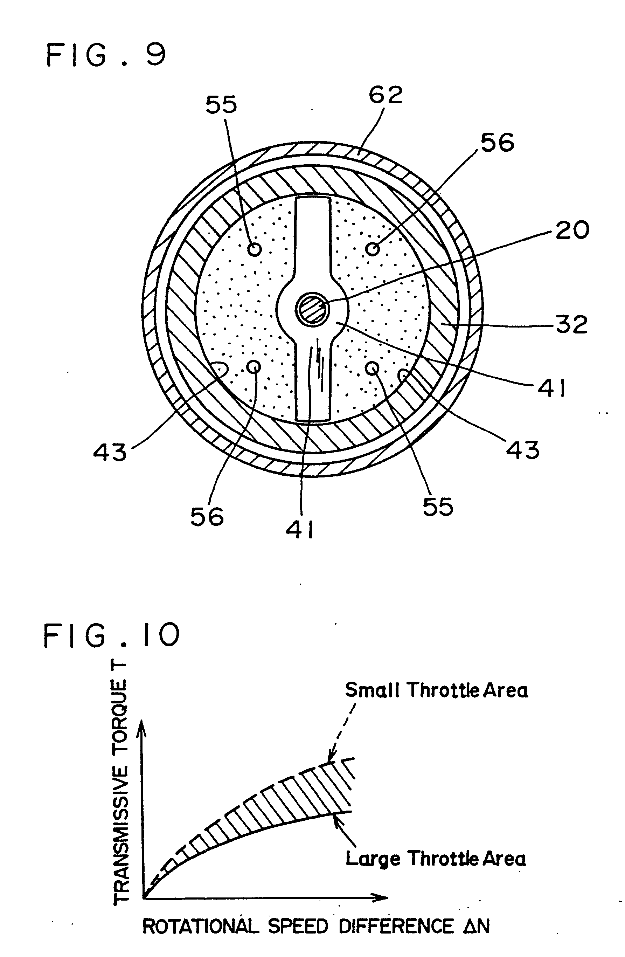

FIGURES 8 to 10 show a fourth embodiment of the present invention, in which the transmissive torque can be controlled depending upon the driving conditions of the vehicle. The front end cap which is illustrated as one body with the front drive shaft 12 and the rotary housing 32 is formed with a plurality (preferably, two pairs) of bypass passages 55, 56 which open to the rotor chamber 42 at a regular circumferential interval. The first pair of diametrically mating bypass passages 55, 55 are always in communication with each other, and the second pair of diametrically mating holes 56, 56 are also always in communication with each other. In order to permit selective communication between the bypass passages 55 and 56, there is provided an electromagnetic throttle valve 57. This valve 57 varies the degree of its throttle opening depending upon the magnitude of an electric current (I) applied from an electronic controller 58. The controller 58 determines the magnitude of the electric current (I) based on various information applied thereto from, for example, a vehicle speed sensor 59, a steering angle sensor 60 and a road surface sensor 61 which detects the coefficient of friction of the road on which the vehicle travels. Consequently, the opening degree of the throttle valve 57 is varied based on the vehicle traveling conditions. This results in controlling the pressure generated within the rotor chamber 42, whereby the transmissive torque can be varied within the range indicated by the solid and broken curves in FIGURE 10. In FIGURE 8, numeral 62 denotes a device housing rotatably carrying the front drive shaft 12 and numeral 63 denotes a cap closing an opening end of the device housing 62 and rotatably carrying the rear drive shaft 20.

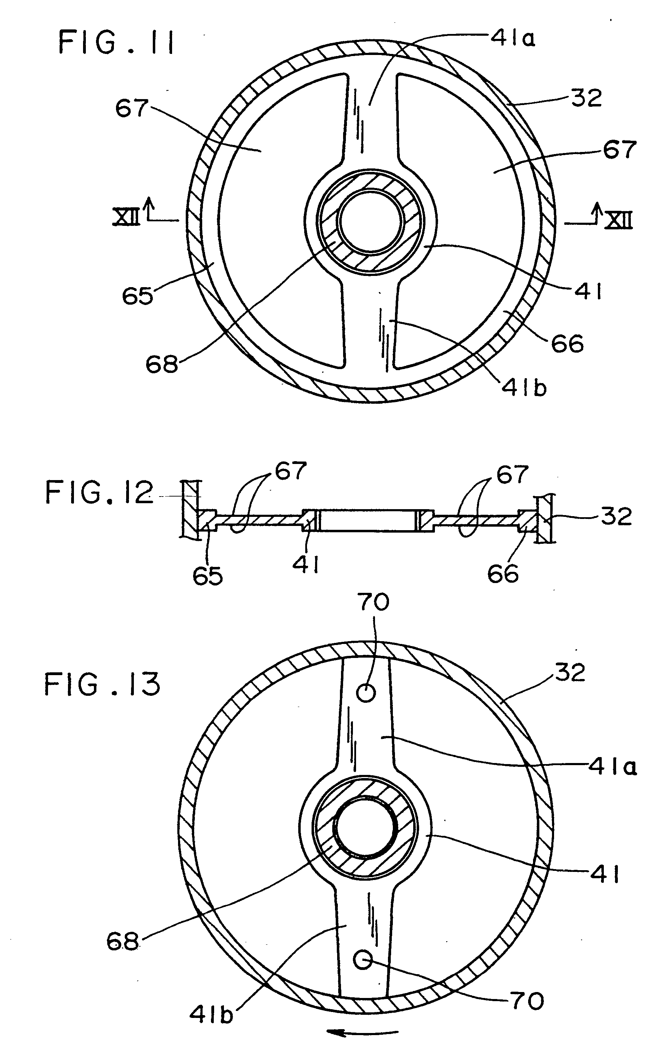

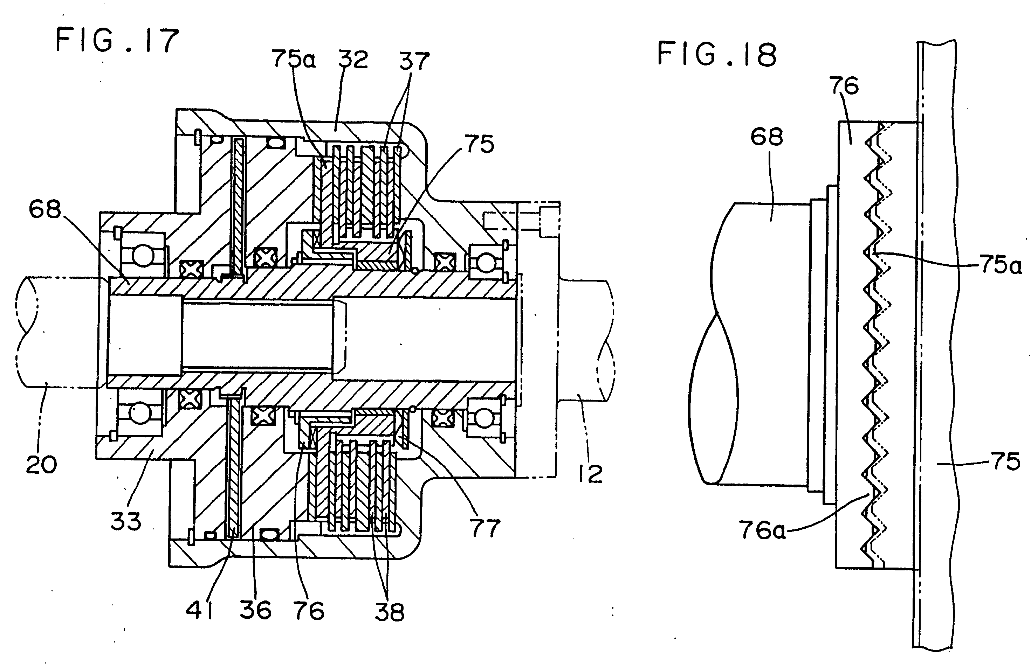

Referring then to FIGURES 11-16, there are shown fifth through eighth embodiments, in each of which an improvement is made to prevent the rotor blade portions from flexing or bending during rotation. In the fifth embodiment shown in FIGURES 11 and 12, the rotor 41 is formed generally as a disc. The rotor 41 is formed with a pair of diametrically opposite blade portions 41a, 41b of a uniform thickness, a pair of semi-circular circumferential edge portions 65, 66 having the same thickness as the blade portions 41a, 41b, and four semi-circular or sector cavities 67 which are symmetrically defined by the blade portions 41a, 41b and the edge portions 65, 66 at axial opposite ends of the rotor 41. When the rotor 41 is rotated within the rotor chamber 42, the same pressure is generated within the sector cavities 67, whereby the rotor 41 can be rotated at the mid position in the axial direction within the rotor chamber 42. This advantageously results in preventing the end surfaces of the rotor 41, front end cap 31 (or housing 32) and piston 36 from suffering from local abrasion. In FIGURE 11, reference numeral 68 denotes a rear shaft sleeve which is connectable with the rear drive shaft 20 through spline engagement, as shown, for example, in FIGURE 17.

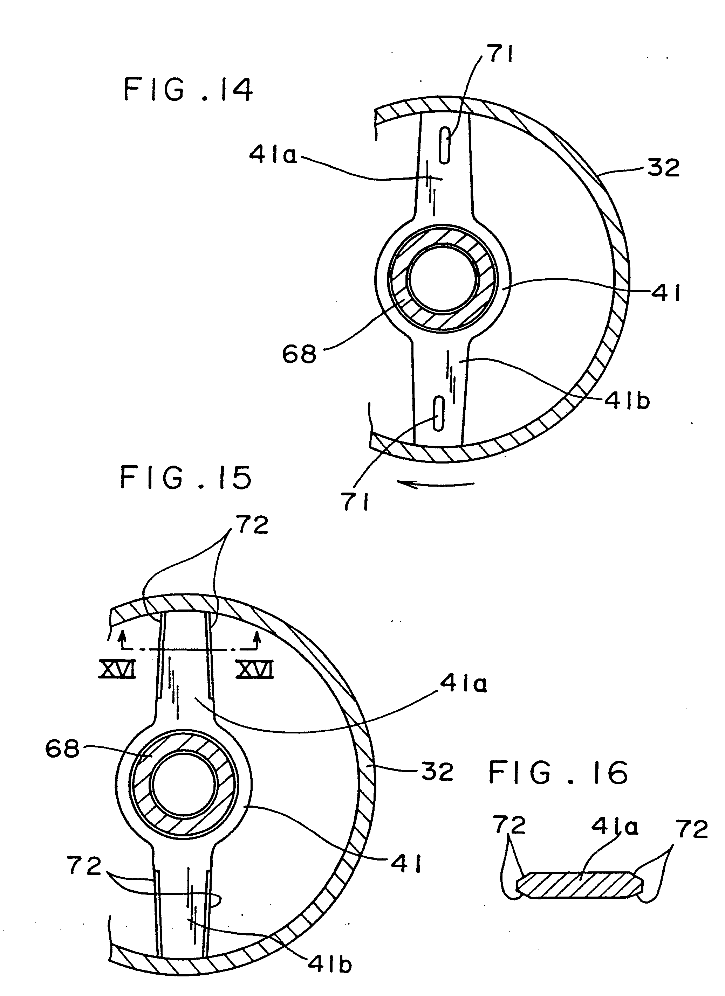

The sixth to eights embodiments use the rotor 41 having a pair of diametrically opposite blade portions 41a, 41b as used in the aforementioned second embodiment. In the sixth embodiment shown in FIGURE 13, the rotor 41 is provided with a pair of round communication holes 70, 70 which extend across the blade portions 41a, 41b to open to the opposite sides thereof. Similarly, in the seventh embodiment shown in FIGURE 14, a pair of elongate communication holes 71, 71 are formed in the blade portions 41a, 41b of the rotor 41 in place of the round holes 70, 70 as used in the sixth embodiment. In any of these embodiments, the pressures at the axial opposite sides of the blade portions 41a, 41b are balanced by virtue of the communication holes 70, 70 or 71, 71. Thus, the flexing of the blade portions 41a, 41b due to the pressure unbalance at the axial opposite sides thereof can be obviated, thereby avoiding local abrasion of the blade portions 41a, 41b and the side surfaces of the front end cap 31 (or rotary housing 32) and the piston 36 which may otherwise be caused by the deviation of the blade portions 41a, 41b.

The eighth embodiment shown in FIGURES 15 and 16 uses the rotor 41 wherein each of the blade portions 41a, 41b is sharpened as knife edge at front and rear edges in the rotational direction. In this particular embodiment, a pair of wedge shape spaces are defined by the slanted surfaces of each knife edge portion 72 and the end surfaces of the front end cap 31 (or rotary housing 32) and the piston 36. Upon rotation of the rotor 41, the wedge shape spaces positively admit the high viscous oil therein, so that the high viscous oil so admitted generates a righting force to position the blade portions 41a, 41b to the axial mid position within the rotor chamber 42.

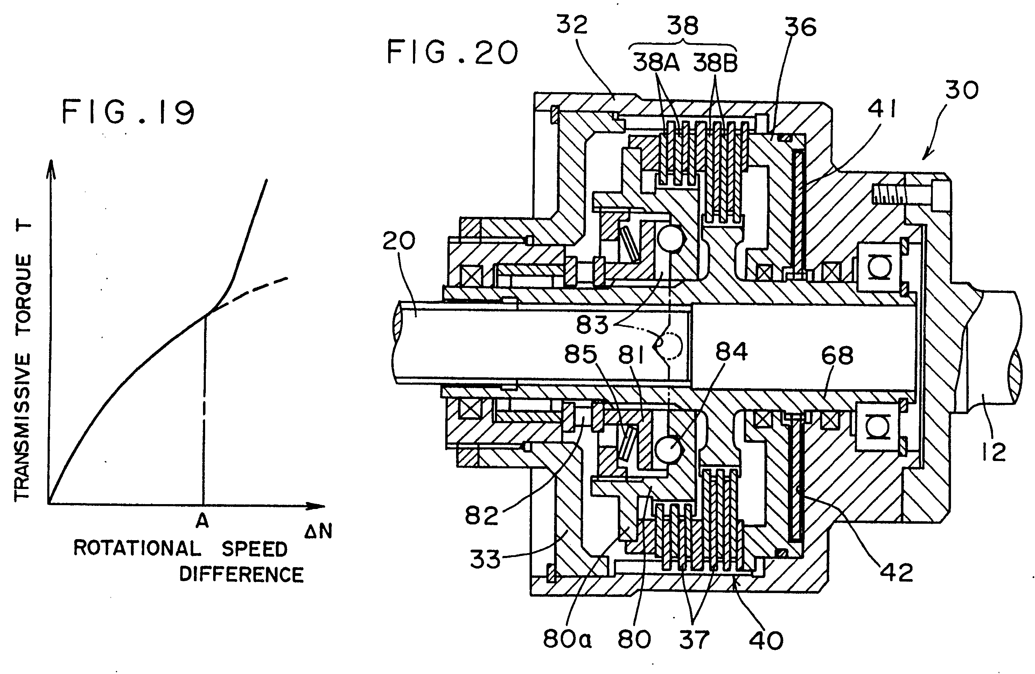

Another improvement of the present invention is illustrated as a ninth embodiment in FIGURES 17 through 19. This particular improvement includes a mechanism which is designed to augment the pressing force acting on the clutch discs 37, 38 when the rotational speed difference between front and rear drive shafts 12, 20 exceeds a predetermined speed so that excessive abrasion of the clutch discs 37, 38 can be obviated. To this end, the mechanism comprises an inner clutch hub 75 rotatably carried over the rear shaft sleeve 68. The hub 75 is spline-engaged at its external surface with the inner clutch discs 38 and is formed with a pressing flange portion 75a interposed between the piston 36 and the clutch discs 37, 38. A flanged transmission sleeve 76 which is spline-engaged over the shaft sleeve 68 is formed with a circular array of radial extending teeth 76a at a flange portion thereof, as shown more detail in FIGURE 18. Likewise, another circular array of radial extending teeth 75a are formed on the clutch hub 75 for engagement with those on the transmission sleeve 76. Further, a spring 77 is provided to bring the teeth 75a on the hub 75 into engagement with those on the sleeve 76. When the rotational speed difference between the front and rear drive shafts 12, 20 exceeds the predetermined speed indicated at A in FIGURE 19, each of the teeth 76a on the sleeve 76 causes the mating one of the teeth 75a on the hub 75 to slightly slide thereon by the wedge action therebetween, as indicated by the phantom line in FIGURE 18. As a result, the hub 75 is axially moved against the spring 76 to apply an augmentative force to the clutch discs 37, 38 in addition to that applied by the piston 36. Consequently, the frictional sliding movements between the clutch discs 37, 38 can be prevented. This advantageously results on one hand in increasing the transmissive torque at a larger rate as the rotational speed difference (N) further increases beyond the predetermined speed (A) shown in FIGURE 19, and on the other hand in obviating the excessive abrasion of the clutch discs 37, 38.

Referring to FIGURE 20, there is shown a tenth embodiment which is further improved from the aforementioned ninth embodiment. In this improvement, the rotor chamber 42 which rotatably receives the rotor 41 having the pair of diametrically opposite blade portions 41a, 41b is defined as a side groove formed at one side of the piston 36, so that an annular circumferential edge portion at one side of the piston 36 is seated on the bottom surface of a cylindrical bore of the rotary housing 32. Further, the half 38B of the inner clutch discs 38 are spline-engaged with the shaft sleeve 68 into which one end of the rear drive shaft 20 is inserted for spline engagement, while the remaining half 38A of the inner clutch discs 38 are spline-engaged with an inner disc hub 80 which is rotatably carried over the shaft sleeve 68. The hub 80 is formed with a flange portion 80a, which cooperates with the piston 36 to press the clutch discs 37, 38 thereupon. A flanged sleeve 81 which is restricted by a thrust bearing 82 to retract away from the hub 80 is carried over the shaft sleeve 68 and is spline-engaged therewith. A cross V-slot 83 is formed at a flange portion of the sleeve 81, while four retaining holes (not numbered) are formed at one side surface of the hub 80 which faces the flange portion of the flanged sleeve 81. The V-slot 83 and retaining holes cooperate to retain four steel balls 84 respectively in the retaining holes. Washer springs 85 are interposed between the hub 80 and the flanged sleeve 81 so as to urge the latter toward the former so that each of the balls 84 is normally seated at the center of each segment of the V-slot 83. However, when the front drive shaft 12 rotates relative to the rear drive shaft 20 at more than the predetermined speed as indicated at (A) in FIGURE 19, each of the balls 84 rolls on a slanted surface of the mating V-slot segment, and the hub 80 is axially moved to augment the engagement between the clutch discs 37, 38. Thus, slippage between the clutch discs 37, 38 is prevented, whereby the transmissive torque is increased at the larger rate as shown in FIGURE 19 as the rotational speed difference (N) between the drive shafts 12, 20 increases beyond the predetermined speed difference (A).

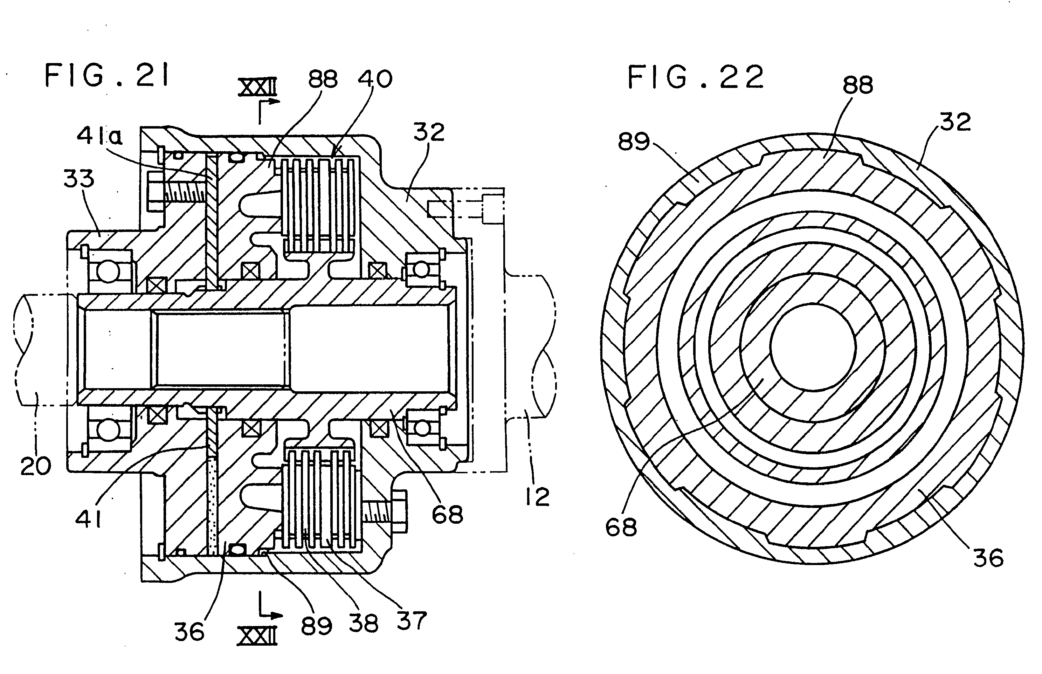

Further, an eleventh embodiment of the present invention is improved in that any independent pin member is not used in connecting the piston 36 with the rotary housing 32 for integral rotation. More specifically, as shown in FIGURES 21 and 22, the piston 36 is formed with a spline portion 88 at its circumferential edge portion close to the clutch discs 37, 38, and the spline portion 88 is engaged with a mating spline portion 89 which is formed at the internal surface of the rotary housing 32 to engage with the outer clutch discs 37. Thus, the failure to assemble any such pin member into the device can be obviated because no such pin member is employed.

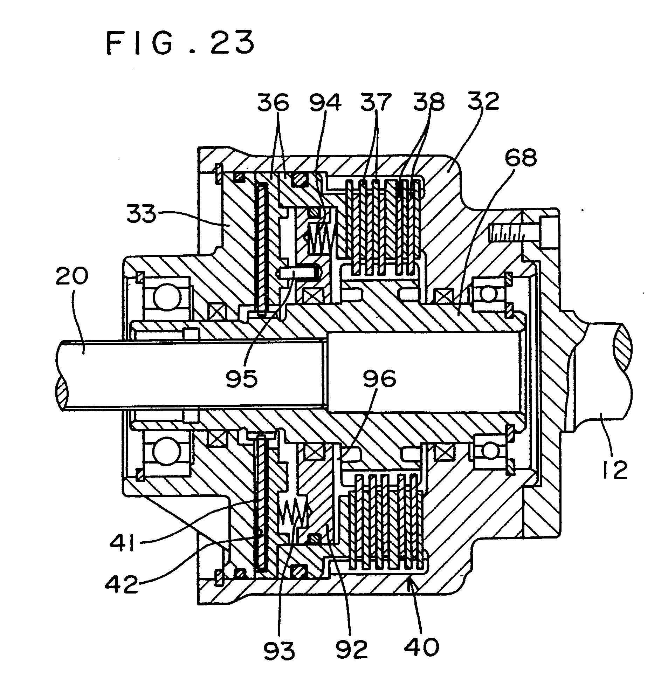

Finally, description will now be made with three other embodiments which are improved to absorb the thermal change in volume of a lubricant which is contained within a clutch plate chamber. In a twelfth embodiment shown in FIGURE 23, the piston 36 for pressing the clutch discs 37, 38 receives therein an axially movable child piston 92 which is biassed by springs 93, 94 provided at opposite side thereof so as to be held at the neutral position of its movable stroke. A pin 95 is provided to restrict the relative rotation between the piston 36 and the child piston 92. The rotary housing 32 and the child piston 92 snugly fit over the shaft sleeve 68 so that a clutch disc chamber 96 is defined by the shaft sleeve 68, rotary housing 32, piston 36 and child piston 92. A lubricant for the clutch discs 37, 38 is filled within the chamber 96. In order to vary the effective volume of the chamber 96, the child piston 92 is axially moved against the springs 93, 94 when the volume of lubricant varies due to thermal changes.

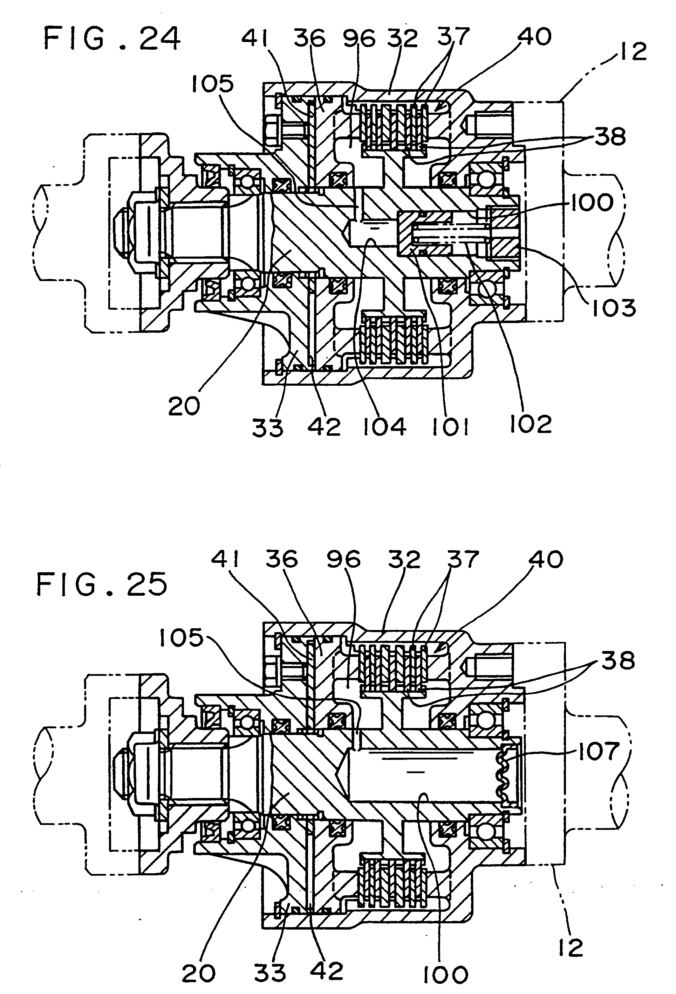

Referring to FIGURES 24 and 25, thirteenth and fourteenth embodiments are exemplified in a simpler form. In these embodiments, the rotary housing 32 and the rear end cap 33 fitted in the rear opening end of the rotary housing 32 directly carry the rear drive shaft 20. The housing 32 and the piston 36 fit over the external surface of the rear drive shaft 20, so that the clutch disc chamber 96 is defined by the housing 32, piston 36 and rear drive shaft 20. A generally cylindrical hole 100 is coaxially formed within the rear drive shaft 20. In the thirteenth embodiment shown in FIGURE 24, an absorption piston 101 is slidably fitted in the cylindrical hole 100 and is biassed by means of a spring 102 which is seated on a nut 103 screwed in an opening end of the cylindrical hole 100. A stepped small hole 104 formed at the bottom of the hole 100 communicates with the clutch disc chamber 96 through a radial passage 105. In the fourteenth embodiment shown in FIGURE 25, a diaphragm 107 is secured to close the opening end of the cylindrical hole 100. Thus, the expansion and contraction in volume of the lubricant within the clutch disc chamber 96 can be absorbed thanks to the axial movement of the absorption piston 101 or thanks to the deformation of the diaphragm 107. It is to be noted that the absorption mechanism including the piston 101 or the diaphragm 107 may be provided not within the rear drive shaft 20, but within the rotary housing 32.

Although the rotor 41 is driven by the rear drive shaft 20 or the shaft sleeve 68 into which the shaft 20 is fitted in any of the aforementioned embodiments, it may be modified to be driven bodily with the rotary housing 32 in which modified instance, the piston 36 and the front end cap 31 interposing the rotor 41 therebetween may be rotated bodily with the shaft 20 or the shaft sleeve 68.

Further, any of the aforementioned torque transmission device may be applied to automobiles of the type wherein the rotational torque generated by the engine 10 is transmitted first to the rear drive shaft 20 for the rear wheels 23, 24 and then, to the front drive shaft 12 for the front wheels 15, 16.

Obviously, other variations and modifications of the present invention are possible in light of the above teachings. It is therefore to be understood that within the scope of the appended claims, the present invention may be practiced otherwise than as specifically described herein.

## Claims

1. A torque transmission device for a four-wheel drive vehicle, having a multiple disc clutch (40) provided between a first drive shaft (12) and a second drive (20) shaft for transmitting rotational torque between said first and second drive shafts (12, 20) and an operating piston (36) for actuating said multiple disc clutch (40), characterized by :
a rotary housing (32) connected to one of said first and second drive shafts (12, 20) for integral rotation therewith and receiving said operating piston (36) therein, said rotary housing (32) and said operating piston (36) defining therebetween an axially narrow circular rotor chamber (42) which shares a common axis with said first and secon drive shafts (12, 20) ;
a rotor (41) received within said rotor chamber (42) and drivingly connected with the other of said first and second drive shafts (12, 20), said rotor (41) being formed with several radially extending blade portions (41a, 41d) which devide said rotor chamber (42) into several space sections (43) ; and
high viscous fluid filled within each of said several space sections (43) for generating pressure acting on said operation piston (36) when said rotor (41) is rotated relative to said rotary housing (32) and said operating piston (36) upon relative rotation between said first and second drive shafts (12, 20).

2. A torque transmission device as set forth in Claim 1, characterized in that :
a communication orifice (53) is formed in each of said blade portions (41a, 41b) to open to opposite end surfaces of said blade portions (41a, 41b) in the rotational direction of said rotor (41).

3. A torque transmission device as set forth in Claim 1, characterized in that :
an annular channel (50) is formed within said operating piston (36) ; and a plurality of communication holes (53) are formed in said operating piston (36) at regular intervals in the rotational direction of said rotor (41) each for communicating with said annular channel (50) and said rotor chamber (42).

4. A torque transmission device as set forth in Claim 3, characterized in that :
the number of said communication holes (53) is twice the number of said blade portions (41a, 41b)

5. A torque transmission device as set forth in Claim 1, characterized in that :
a plurality of communication passages (55, 56) are formed in said rotary housing (32) to open, at regular intervals in the rotational direction of said rotor (41) to said rotor chamber (42) within which said rotor (41) is rotatable, said torque transmission device further comprising :
an electromagnetic throttle valve (57) in hydraulic communication with said communication passages (55, 56) and having a solenoid for controlling the degree of a throttle opening thereof in dependence upon electric current (I) applied to said solenoid so as to control communication between said communication passages (55, 56) ;
at least one sensor (54) for detecting a parameter representing a driving condition of said four-wheel drive vehivle ; and
an electronic controller (58) responsive to an output signal from said at least one sensor (59) for determining the magnitude of the electric current (I) in dependence upon said output signal and for applying the electric current of the magnitude so determined to said solenoid of said electromagnetic throttle valve (57).

6. A torque transmission device as set forth in Claim 1, characterized in that : said rotor (41) is formed as a generally disc-like shape in which a plurality of semi-circular cavities (67) of the same depth are provided at axial opposite sides of said rotor (41) to define at least two blade portions (41a, 41b),and at least two semi-circular edge portions (65, 66).

7. A torque transmission device as set forth in Claim 1, characterized in that :
each of said blade portions (41a, 41b) is formed therein with a communication hole (70, 71) which extends in the axial direction of said rotor (41) to open to opposite side surfaces of said blade portions (41a, 41b).

8. A torque transmission device as set forth in Claim 7, characterized in that :
said commication hole (70, 71) is a round hole.

9. A torque transmission device as set forth in Claim 7, characterized in that :
said communication hole (70, 71) is an elongate hole.

10. A torque transmission device as set forth in Claim 1, characterized in that :
each of said blade portions (41a, 41b) takes the form of knife edge at at least a forward end in the rotational direction of said rotor (41).

11. A torque transmission device as set forth in Claim 1, characterized in that : said torque transmission device further comprises shaft means (68) rotatably carried in said rotary housing (32) and integral or rotatable bodily with the other of said first and second drive shafts (12, 20) ; and
said multiple disc clutch device (40) being received within said rotor housing (32), and having several outer clutch discs (37) bodily rotatable with said rotary housing (32) and several inner clutch discs (38) bodily rotatable with said shaft means (68) said outer and inner clutch discs (37, 38) being alternately arranged between an end wall of said rotary housing (32) and one end of said piston (36).

12. A torque transmission device as set forth in Claim 11, characterized in that said multiple disc clutch device (40) further comprises :
an inner clutch hub (75) rotatably and axially movable carried on said shaft means (68) and engaged with all of said inner clutch discs (38) for integral rotation therewith, said inner clutch hub (75) having a flange portion interposed between said piston (36) and said multiple clutch discs (37, 38) ;
a transmission sleeve (76) carried over said shaft means (68) for integral rotation therewith ;
cam means (75a, 76a) interposed between said inner clutch hub (75) and said transmission sleeve (76a) for axially moving said inner clutch hub by virtue of wedge action when the rotational speed difference between said inner clutch hub (75) and said transmission sleeve (76) exceeds a predetermined speed, so as to press said inner and outer clutch discs (38, 37) by means of said flange portion of said inner clutch hub (75) ; and
a spring (77) for urging said inner clutch hub (75) in a direction opposite to the direction in which said inner clutch hub (75) is axially moved by virtue of said cam means (75a, 76a).

13. A torque transmission device as set forth in Claim 12, characterized in that said cam means (75a, 76a) comprises :
a first array of radially extending teeth (76a) formed at a flange portion of said transmission sleeve (76) ; and
a second array of radially extending teeth (75a) formed at said flange protion of said inner clutch hub (75) for complemental engagement with said first array of radially extending teeth (76a).

14. A torque transmission device as set forth in Claim 11, characterized in that one half of said inner clutch discs (38A) are engaged with said shaft means (68) for integral rotation therewith and in that said multiple disc clutch device (40) further comprises :
an inner disc hub (80) rotatably and axially movably carried over said shaft means (68) and engaged with the remaining half of said inner clutch discs (38B) for integral rotation therewith, said inner disc hub having a flange portion (80a) for pressing said outer and inner clutch discs (37, 38) ;
a transmission sleeve (81) carried over said shaft means (68) to be bodily rotatable therewith but axially movable toward said inner disc hub (80) ; and
cam means (83, 84) interposed between facing ends of said inner disc hub (80) and said transmission sleeve (81) for axially moving said inner disc hub (80) by virtue of wedge action when the rotational speed difference between said inner disc hub (80) and said transmission sleeve (81) exceeds a predetermined speed, so as to press said inner and outr clutch discs (38, 37).

15. A torque transmission device as set forth in Claim 14, characterized in that said cam means comprises :
several V-slots (83) formed at one end surface of said transmission sleeve (81) ;
several retaining holes formed at a mating one end surface of said inner disc hub (80) ; and
several steel balls (84) respectively retained in said several retaining holes and each normally held seated on an associated one of said V-slots (83).

16. A torque transmission device as set forth in Claim 15, characterized in that said torque transmission device further comprises :
a bias spring (85) interposed between said inner disc hub (80) and said transmission sleeve (81) for urging said transmission sleeve (81) toward said inner disc hub (80) so as to press the inner and outer clutch discs (38, 37).

17. A torque transmission device as set forth in Claim 11, characterized in that :
said rotary housing (32) is formed with a spline portion (89) with which the circumferential portions of said outer clutch discs (37) are engaged ; and
said piston (36) is formed at a circumferential edge portion close to said outer and inner clutch discs (37, 38) with a mating spline portion (88) which is engaged with said spline portion (89) of said rotary housing.

18. A torque transmission device as set forth in Claim 11, characterized in that : said torque transmision device further comprises :
a child piston (92) fluid tightly received in said piston (36) and fluid-tightly carried over said shaft means (68) for defining a clutch disc chamber (96) provided with said multiple disc clutch device (40) therein, together with said piston (36), said rotary housing (32) and said shaft means (68) ; a lubricant filled within said clutch disc chamber (96) ; and
spring means (93) interposed between said piston (36) and said child piston (92) for normally holding said child piston (92) at a neutral position of a stroke through which said child piston (92) is movable within said piston (36).

19. A torque transmission device as set forth in Claim 1, characterized in that said rotary housing (32), said piston (36) and said shaft means (68) define a clutch disc chamber (96) provided with said multiple disc clutch device (40) therein, and that said torque transmission device further comprises :
a lubricant filled in said clutch disc chamber (96) ;
and absorbing means provided within the other of said first and second drive shafts (12, 20) for absorbing the thermal change in volume of said lubricant.

20. A torque transmission device as set forth in Claim 19, characterized in that said absorbing means comprises :
an absorbing piston (101) received within a cylindrical hole (100) formed in the other of said first and second drive shafts (12, 20) ; and
spring means (102) for urging said absorbing piston (101) toward one direction but for permitting said absorbing piston (101) to move toward the other direction when the volume of said lubricant expands.

21. A torque transmission device as set forth in Claim 19, characterized in that said absorbing means comprises :
a diaphragm (107) provided for closing a sole opening end of a cylindrical hole (100) which is formed in the other of said first and second drive shafts (12, 20) and which is in fluid communication with said clutch disc chamber (96).

## Patentansprüche

1. Drehmoment-Übertragungseinrichtung für ein Fahrzeug mit Allradantrieb, mit einer Mehrscheibenkupplung (40) zwischen einer ersten Antriebswelle (12) und einer zweiten Antriebswelle (20) zur Übertragung eines Drehmoments zwischen der ersten und zweiten Antriebswelle (12, 20) und mit einem Betätigungskolben (36) zur Betätigung der Mehrscheibenkupplung (40), gekennzeichnet durch
ein drehbares Gehäuse (32), welches mit einer der beiden Antriebswellen (12, 20) verbunden ist zur gemeinsamen Drehung zusammen mit dieser und zur Aufnahme des Betätigungskolbens (36), wobei das drehbare Gehäuse (32) und der Betätigungskolben (36) dazwischen eine in axialer Richtung schmale, kreisförmige Rotorkammer (42) definieren, welche eine gemeinsame Achse hat mit den beiden Antriebswellen (12, 20) ;
durch einen Rotor (41) in der Rotorkammer (42) in Antriebsverbindung mit der anderen der beiden Antriebswellen (12, 20), wobei der Rotor (41) mehrere sich in radialer Richtung erstreckende vorspringende Blätter (41a, 41b) aufweist, die die Rotorkammer (42) in mehrere Raumabschnitte (43) unterteilen ;
und durch ein hochviskoses Strömungsmedium innerhalb eines jeden der mehreren Raumabschnitte (43) zur Erzeugung eines Drucks, welcher den Betätigungskolben (36) beaufschlagt wenn der Rotor (41) relativ zum Rotorgehäuse (32) und zum Betätigungskolben (36) gedreht wird aufgrund einer Relativdrehung zwischen der ersten und zweiten Antriebswelle (12, 20).

2. Drehmoment-Übertragungseinrichtung nach Anspruch 1, dadurch gekennzeichnet, daß :
eine Durchtrittsöffnung (53) in jedem der Blattbereiche (41a, 41b) ausgebildet ist und sich zu entgegengesetzten Endflächen der Blattbereiche (41a, 41b) hin, in der Drehrichtung des Rotors (41) gesehen, öffnet.

3. Drehmoment-Übertragungseinrichtung nach Anspruch 1, dadurch gekennzeichnet, daß
ein Ringkanal (50) in dem Betätigungskolben (36) ausgebildet ist ; und daß eine Vielzahl von Durchgangsöffnungen (53) im Betätigungskolben (36) ausgebildet sind, und zwar in regelmäßigen Intervallen in Umfangsrichtung des Rotors (41), wobei eine jede der Durchgangsöffnungen mit dem Ringkanal (50) und der Rotorkammer (42) kommuniziert.

4. Drehmoment-Übertragungseinrichtung nach Anspruch 3, gekennzeichnet dadurch, daß
die Anzahl der Durchgangsöffnungen (43) doppelt so groß ist wie die Anzahl der Blattbereiche (41a, 41b).

5. Drehmoment-Übertragungseinrichtung nach Anspruch 1, dadurch gekennzeichnet, daß
eine Vielzahl von Durchgangsöffnungen (55, 56) in dem rotierendem Gehäuse (32) ausgebildet sind und sich in regelmäßigen Intervallen, in Drehrichtung des Rotors (41) zu gesehen, zur Rotorkammer (42) hin öffnen, in der der Rotor (41) drehbar ist, wobei die Drehmomentübertragungseinrichtung ferner folgendes umfaßt : ein elektromagnetisches Drosselventil (57) in hydraulischer Verbindung mit den Durchgangsöffnungen (55, 56) sowie ein Solenoid zur Steuerung des Ausmaßes der Drosselöffnung in Abhängigkeit vom elektrischen Strom (I) des Solenoids, so daß die Kommunikation zwischen den Durchgangsöffnungen (55, 56) gesteuert wird ; mindestens ein Sensor (59, 60, 61) zur Erfassung eines Parameters über den Antriebszustand des Allradfahrzeugs ; und eine elektronische Steuereinrichtung (58), welche auf das Ausgangssignal des mindestens einen Sensors (59, 60, 61) anspricht zur Bestimmung der Größe des elektrischen Stroms (I) in Abhängigkeit vom Ausgangssignal und zur Beaufschlagung des Solenoids des elektromagnetischen Drosselventils (57) mit dem so festgelegten elektrischen Strom.

6. Drehmoment-Übertragungseinrichtung nach Anspruch 1, dadurch gekennzeichnet, daß der Rotor (41) eine im allgemeinen scheibenförmige Gestalt hat, mit einer Vielzahl von halbkreisförmigen Ausnehmungen (67) gleicher Tiefe, auf relativ zur Achse entgegengesetzten Seiten des Rotors (41), so daß mindestens zwei Blattbereiche (41a, 41b) definiert werden, sowie mindestens zwei halbkreisförmige Randbereiche (65, 66).

7. Drehmoment-Übertragungseinrichtung nach Anspruch 1, dadurch gekennzeichnet, daß jeder der Blattbereiche (41a, 41b) eine Durchgangsöffnung (70, 71) aufweist, welche sich in axialer Richtung des Rotors (41) erstreckt und auf entgegengesetzten Flächen der Blattbereiche (41a, 41b) offen sind.

8. Drehmoment-Übertragungseinrichtung nach Anspruch 7, dadurch gekennzeichnet, daß die Durchgangsöffnungen (70, 71) runde Bohrungen sind.

9. Drehmoment-Übertragungseinrichtung nach Anspruch 7, dadurch gekennzeichnet, daß die Druchgangsöffnung (70, 71) im Querschnitt langgestreckte Öffnungen sind.

10. Drehmoment-Übertragungseinrichtung nach Anspruch 1, dadurch gekennzeichnet, daß jeder der Blattbereiche (41a, 41b) die Form einer Messerkante an mindestens einem vorderen Ende, in Drehrichtung des Rotors (41) gesehen, aufweist.

11. Drehmoment-Übertragungseinrichtung nach Anspruch 1, dadurch gekennzeichnet, daß sie zusätzlich folgendes umfaßt : eine Welle (68) welche drehbar in dem Rotorgehäuse (32) gelagert ist und mit der anderen der beiden Antriebswellen (12, 20) einstückig oder körperlich drehbar verbunden ist ; wobei die Mehrscheibenkupplungseinrichtung (40) in dem Rotorgehäuse (32) aufgenommen ist und mehrere äußere Kupplungsscheiben (37) aufweist, die koerperlich mit dem Rotorgeäuse (32) drehbar sind sowie mehrere innere Kupplungsscheiben (38), welche körperlich mit der Welle (68) drehbar sind, wobei die äußeren und inneren Kupplungsscheiben (37, 38) alternierend zwischen einer Endwand des drehbaren Gehäuses (32) und einem Ende des Kolbens (36) angeordnet sind.

12. Drehmoment-Übertragugnseinrichtung nach Anspruch 11, dadurch gekennzeichnet, daß die Mehrscheibenkupplungseinrichtung (40) folgendes umfaßt : eine Innenkupplungsnabe (75), welche drehbar und axial bewegbar auf der Welle (68) gelagert ist und mit allen inneren Kupplungsscheiben (38) in Verbindung steht zur gemeinsamen Drehung mit diesen, wobei die innere Kupplungsnabe (75) einen Flanschbereich aufweist der zwischen dem Kolben (36) und der Vielzahl der Kupplungsscheiben (37, 38) liegt ; sowie eine Übertragungshülse (76) über der Welle (68) zur einstückigen Drehung zusammen mit dieser; Nockeneinrichtungen (75a, 76a) zwischen der inneren Kupplungsnabe (75, 70) und der Übertragungshülse (76a) zur axialen Bewegung der inneren Kupplungsnabe vermöge einer Keilwirkung, wenn die Drehgeschwindigkeitsdifferenz zwischen der inneren Kupplungsnabe (75) und der Übertragungshülse (76) eine vorbestimmte Geschwindigkeit überschreitet, so daß die inneren und äußeren Kupplungsscheiben (38, 37) durch den Flanschbereich der inneren Kupplungsnabe (75) gepreßt werden ; und eine Feder (77), welche die innere Kupplungsnabe (75) in einer Richtung vorspannt welche der Richtung entgegengesetzt ist in die die innere Kupplungsnabe (75) vermöge der Nockeneinrichtung (75a, 76a) axial bewegt wird.

13. Drehmoment-Übertragungseinrichtung nach Anspruch 12, dadurch gekennzeichnet, daß die Nockeneinrichtungen (75a, 76a) folgendes umfassen : eine erste Anordnung von sich in radialer Richtung erstreckenden Zähnen (76a) an einem Flanschbereich der Übertragungshülse (76) ; eine zweite Anordnung von sich in radialer Richtung erstreckenden Zähnen (75a) an dem Flanschbereich der inneren Kupplungsnabe (75) für einen komplementären Eingriff mit der ersten Anordnung von sich in radialer Richtung erstreckenden Zähnen (76a).

14. Drehmoment-Übertragungseinrichtung nach Anspruch 11, dadurch gekennzeichnet, daß eine Hälfte der inneren Kupplungsscheiben (38a) mit der Welle (68) verbunden sind, zur integralen Drehung zusammen mit dieser, und daß die Mehrscheibenkupplungseinrichtung (40) folgendes umfaßt : eine innere Scheibennabe (80), welche auf der Welle (68) drehbar und axial bewegbar gelagert ist und mit der verbleibenden Hälfte der inneren Kupplungsscheiben (38B) in Verbindung stehen zur integralen Drehung zusammen mit diesen, wobei die innere Scheibennabe einen Flanschbereich (80a) aufweist, welcher die äußeren und inneren Kupplungsscheiben (37, 38) preßt ;

eine Übertragungshülse (81), welche auf der Welle (68) gelagert ist und körperlich zusammen mit dieser drehbar ist, jedoch axial zur inneren Scheibennabe (80) hin bewegbar ist ;

Nockeneinrichtung (83, 84) zwichen einander gegenüberliegenden Enden der inneren Scheibennabe (80) und der Übertragungshülse (81) zur axialen Bewegung der inneren Scheibennabe (80) vermöge der Keilwirkung, welche zustande kommt, wenn die Drehgeschwindigkeitsdifferenz zwischen der inneren Scheibennabe (80) und der Übertragungshülse (81) eine vorbestimmte Geschwindigkeit übersteigt, so daß die inneren und äußeren Kupplungsscheiben (38, 37) gepreßt werden.

15. Drehmoment-Übertragungseinrichtung nach Anspruch 14, dadurch gekennzeichnte, daß die Nockeneinrichtung folgendes umfaßt :

mehrere V-förmige Schlitze (83) in einer Endfläche der Übertragungshülse (81) ;

mehrere Halterungsausnehmungen in einer angrenzenden Endfläche der inneren Scheibennabe (80) ;

mehrere Stahlkugeln (84) in den mehreren Halterungsöffnungen, welche jeweils normalerweise in einen zugeordneten V-förmigen Schlitz (83) eingreifen.

16. Drehmoment-Übertragungseinrichtung nach Anspruch 15, dadurch gekennzeichnet, daß die Drehmoment-Übertragungseinrichtung folgendes umfaßt :

eine Vorspannfeder (85) zwischen der inneren Scheibennabe (80) und der Übertragungshülse (81), so daß die Übertragungshülse (81) in Richtung auf die innere Scheibennabe (80) gedrückt wird und die inneren und äußeren Kupplungsscheiben (38, 37) gepreßt werden.

17. Drehmoment-Übertragungseinrichtung nach Anspruch 11, dadurch gekennzeichnet, daß :

das drehbare Gehäuse (32) einen gerändelten Bereich (89) aufweist, zum Angriff an den Umfangsbereichen der äußeren Kupplungsscheiben (37) ;

daß der Kolben (36) an einem Umfangskantenbereich nahe bei den äußeren und inneren Kupplungsscheiben (37, 38) einen angepaßten gerändelten Bereich (88) aufweist, welcher mit dem gerändelten Bereich (89) des drehbaren Gehäuses in Eingriff steht.

18. Drehmoment-Übertragungseinrichtung nach Anspruch 11, dadurch gekennzeichnet, daß sie folgendes umfaßt :

einen Tochterkolben (92), welcher strömungsmedium-dicht in dem Kolben (38) aufgenommen ist und strömungsmedium-dicht auf der Welle (68) gelagert ist, wobei der Tochterkolben (92) zusammen mit dem Kolben (36), dem drehbaren Gehäuse (32) und der Welle (68) eine Kupplungsscheibenkammer (96) für die Mehrscheibenkupplungseinrichtung (40) definiert ;

ein in die Kupplungsscheibenkammer (96) eingefülltes Schmiermittel ;

und eine Federeinrichtung (93) zwischen dem Kolben (36) und dem Tochterkolben (92), so daß der Tochterkolben (92) normalerweise in einer neutralen Position eines Hubes gehalten wird, um den der Tochterkolben (92) innerhalb des Kolbens (36) bewegbar ist.

19. Drehmoment-Übertragungseinrichtung nach Anspruch 1, dadurch gekennzeichnet, daß das drehbare Gehäuse (32) der Kolben (36) und die Welle (68) eine Kupplungsscheibenkammer (96) definieren, welche mit der Mehrscheibenkupplungseinrichtung (40) in ihrem Inneren versehen ist und, daß die Drehmomentüber-tragungseinrichtung ferner folgendes umfaßt :

Schmiermittel ist in die Kupplungsscheibenkammer (96) eingefüllt ;

und eine Absorbtionseinrichtung ist in der anderen der beiden Antriebswellen (12, 20) vorgesehen zur Absorbtion der thermischen Volumenänderung des Schmiermittels.

20. Drehmoment-Übertragungseinrichtung nach Anspruch 19, dadurch gekennzeichnet, daß die Absorbtionseinrichtung folgendes umfaßt :

einen Absorbtionskolben (101) innerhalb einer zylindrischen Öffnung (100), welche in der anderen der beiden Antriebswellen (12, 20) ausgebildet ist ; und eine Federeinrichtung (102), welche den Absorbtionskolben (101) in einer Richtung drückt, aber eine Bewegung des Absorbtionskolbens (101) in der anderen Richtung gestattet, wenn das Volumen des Schmiermittels expandiert.

21. Drehmoment-Übertragungseinrichtung nach Anspruch 19, dadurch gekennzeichnet, daß die Absorbtionseinrichtung folgendesumfaßt :

ein Diaphragma (107) zum Verschluß eines einzigen offenen Endes einer zylindrischen Bohrung (100) in der anderen der beiden Antriebswellen (12, 20), wobei die Bohrung in Strömungskommunikation mit der Kurbelscheibenkammer (96) steht.

## Revendications

1. Dispositif de transmission de couple destiné à un véhicule à quatre roues motrices, comprenant un embrayage à disques multiples (40) prévu entre un premier arbre d'entraînement (12) et un second arbre d'entraînement (20) pour transmettre un couple de rotation entre lesdits premier et second arbres d'entraînement (12, 20) et un piston d'actionnement (36) servant à actionner ledit embrayage à disques multiples (40), caractérisé par :

un boîtier rotatif (32) relié à l'un desdits premier et second arbres d'entraînement (12, 20) en vue de sa rotation solidaire avec ce denier et à l'intérieur duquel est logé ledit piston d'actionnement (36), ledit boîtier rotatif (32) et ledit piston d'actionnement (36) définissant entre eux une chambre à rotor circulaire axialement étroite (42) qui partage un axe commun avec lesdits premier et second arbres d'entraînement (12, 20) ;

un rotor (41) reçu à l'intérieur de ladite chambre à rotor (42) et relié à entraînement à l'autre desdits premier et second arbres d'entraînement (12, 20), ledit rotor (41) étant formé de manière à présenter plusieurs parties formant ailette s'étendant radialement (41a, 41d) qui divisent ladite chambre à rotor (42) en plusieurs espaces (43) ; et

un fluide de viscosité élevée remplissant chacun des espaces (43) pour créer une pression agissant sur ledit piston d'actionnement (36) lorsque ledit rotor (41) est entraîné en rotation par rapport audit boîtier rotatif (32) et audit piston d'actionnement (36) lors de la rotation relative entre lesdits premier et second arbres d'entraînement (12, 20).

2. Dispositif de transmission de couple selon la revendication 1, caractérisé en ce que :

un orifice de communication (53) est formé dans chacune desdites parties formant ailette (41a, 41b) de manière à s'ouvrir sur des surfaces d'extrémité opposées desdites parties formant ailette (41a, 41b) dans le sens de rotation dudit rotor (41).

3. Dispositif de transmission de couple selon la revendication 1, caractérisé en ce que :

un canal annulaire (50) est formé à l'intérieur dudit piston d'actionnement (36) ; et une multiplicité d'orifices de communication (53) sont formés dans ledit piston d'actionnement (36) à des intervalles réguliers dans le sens de rotation dudit rotor (41), chacun servant à communiquer avec ledit canal annulaire (50) et avec ladite chambre à rotor (42).

4. Dispositif de transmission de couple selon la revendication 3, caractérisé en ce que :

le nombre desdits orifices de communication (53) est égal à deux fois le nombre desdites parties formant ailette (41a, 41b).

5. Dispositif de transmission de couple selon la revendication 1, caractérisé en ce que :

une multiplicité de passages de communication (55, 56) sont formés dans ledit boîtier rotatif (32) pour s'ouvrir, à des intervalles réguliers dans le sens de rotation dudit rotor (41), sur ladite chambre à rotor (42) à l'intérieur de laquelle ledit rotor (41) est apte à être entraîné en rotation, ledit dispositif de transmission de couple comprenant en outre :

une soupape d'étranglement électromagnétique (57) en communication hydraulique avec lesdits passages de communication (55, 56) et ayant un solénoïde servant à commander le dégré d'ouverture d'un étranglement de celle-ci en fonction d'un courant électrique (I) appliqué audit solénoïde de manière à commander la communication entre lesdits passages de communication (55, 56) ;

au moins un détecteur (54) servant à détecter un paramètre représentant une condition d'entraînement dudit véhicule à quatre roues motices ; et

un contrôleur électonique (58) réagissant à un signal de sortie en provenance dudit détecteur (59) au nombre d'au moins un pour déterminer la valeur du courant électrique (I) en fonction dudit signal de sortie et pour appliquer le courant électrique de la valeur ainsi déterminée audit solénoïde de ladite soupape d'étranglement électromagnétique (57).

6. Dispositif de transmission de couple selon la revendication 1, caracrérisé en ce que : ledit rotor (41) est réalisé sous une forme sensiblement analogue à celle d'un disque dans laquelle une multiplicité de cavités semicirculaires (67) ayant la même profondeur sont prévues sur des côtés axialement opposés dudit rotor (41) afin de définir au moins deux parties formant ailette (41a, 41b) et au moins deux parties formant bord semicirculaire (65, 66).

7. Dispositif de transmission de couple selon la revendication 1, caractérisé en ce que : chacune desdites parties formant ailette (41a, 41b) est formée de manière à présenter un orifice de communication (70, 71) qui s'étend dans la direction axiale dudit rotor (41) pour s'ouvrir sur des surfaces de côtés opposés desdites parties formant ailette (41a, 41b).

8. Dispositif de transmission de couple selon la revendication 7, caractérisé en ce que : ledit orifice de communication (70, 71) est un orifice rond.

9. Dispositif de transmission de couple selon la revendication 7, caractérisé en ce que : ledit orifice de communication (70, 71) est un orifice de forme allongée.

10. Dispositif de transmission de couple selon la revendication 1, caractérisé en ce que : chacune desdites parties formant ailette (41a, 41b) se présente sous la forme d'une arête de couteau au moins au niveau d'une extrémité avant dans le sens de rotation dudit rotor (41).

11. Dispositif de transmission de couple selon la revendication 1, caractérisé en ce que : ledit dispositif de transmission de couple comprend en outre ; des moyens formant arbre (68) portés de manière à pouvoir tourner dans ledit boîtier rotatif (32) et solidaires ou aptes à tourner solidairement avec l'autre desdits premier et second arbres d'entraînement (12, 20) ; et ledit dispositif formant embrayage à disques multiples (40) étant reçu à l'intérieur dudit boîtier rotatif (32), et présentant plusieurs disques d'embrayage externes (37) aptes à être entraînés en rotation solidairement avec ledit boîtier rotatif (32) et plusieurs disques d'embrayage internes (38) aptes à être entraînés en rotation solidairement avec lesdits moyens formant arbre (68), lesdits disques d'embrayage externes et internes (37, 38) étant disposés alternativement entre une paroi d'extrémité dudit boîtier rotatif (32) et une extrémité dudit piston (36).

12. Dispositif de transmission de couple selon la revendication 11, caractérisé en ce que ledit dispositif formant embrayage à disques multiples (40) comprend en outre :

un moyeu d'embrayage interne (75) apte à être déplacé en rotation et axialement, porté sur lesdits moyens formant arbre (68) et engagé avec tous lesdits disques d'embrayage internes (38) en vue d'une rotation solidaire avec ces derniers, ledit moyeu d'embrayage interne (75) présentant une partie formant bride interposée entre ledit piston (36) et lesdits disques d'embrayage multiples (37, 38) ;

un manchon de transmission (76) porté par-dessus lesdits moyens formant arbre (68) en vue d'une rotation solidaire avec ce dernier ;

des moyens formant came (75a, 76a) interposés entre ledit moyeu d'embrayage interne (75) et ledit manchon de transmission (76a) pour déplacer axialement ledit moyeu d'embrayage interne grâce à l'action de calage se produisant lorsque la différence de vitesse de rotation existant entre ledit moyeu d'embrayage interne (75) et ledit manchon de transmission (76) dépasse une vitesse prédéterminée, de manière à exercer une pression sur lesdits disques d'embrayage internes et externes (38, 37) au moyen de ladite partie formant bride dudit moyeu d'embrayage interne (75) ; et

un ressort (77) servant à solliciter ledit moyeu d'embrayage interne (75) dans une direction opposée à la direction du déplacement axial dudit moyeu d'embrayage interne (75) grâce audits moyens formant came (75a, 76a).

13. Dispositif de transmission de couple selon la revendication 12, caractérisé en ce que lesdits moyens formant came (75a, 76a) comprennent :

une première série de dents s'étendant radialement (76a) formée au niveau d'une partie formant bride dudit manchon de transmission (76) ; et

une seconde série de dents s'étendant radialement (75a) formée au niveau d'une partie formant bride dudit moyen d'embrayage interne (75) en vue d'un engagement complémentaire avec ladite première série de dents s'étendant radialement (76a).

14. Dispositif de transmission de couple selon la revendication 11, caractérisé en ce qu'une moitié desdits disques d'embrayage internes (38A) s'engage avec lesdits moyens formant arbre (68) en vue d'une rotation solidaire avec ces derniers, et en ce que ledit dispositif d'embrayage à disques multiples (40) comporte en outre :

un moyeu de disques internes (80) porté sur lesdits moyens formant arbre (68) de manière à pouvoir se déplacer en rotation et axialement et s'engageant avec la moitié restante desdits disques d'embrayage internes (38B) en vue d'une rotation solidaire avec ces derniers, ledit moyeu de disques internes présentant une partie formant bride (80a) servant à exercer une pression sur lesdits disques d'embrayage externes et internes (37, 38) ;

un manchon de transmission (81) porté par-dessus lesdits moyens formant arbre (68) en vue d'une rotation solidaire avec ces derniers mais axialement déplaçable vers ledit moyeu de disques internes (80); et

des moyens formant came (83, 84) interposés entre les extrémités en vis-à-vis dudit moyeu de disques internes (80) et dudit manchon de transmission (81) pour déplacer axialement ledit moyeu de disques internes (80) grâce à l'effet de calage se produisant lorsque la différence de vitesse de rotation existant entre ledit moyeu de disques internes (80) et ledit manchon de transmission (81) dépasse une vitesse prédéterminée, de manière à exercer une pression sur lesdits disques d'embrayage internes et externes (38, 37).

15. Dispositif de transmission de couple selon la revendication 14, caractérisé en ce que lesdits moyens formant came comprennent :

plusieurs rainures en V (83) formées au niveau d'une surface d'extrémité dudit manchon de transmission (81) ;

une multiplicité d'orifices de retenue formés au niveau d'une surface d'extrémité correspondante dudit moyeu de disques internes (80) ; et

plusieurs billes en acier (84) retenues respectivement dans ladite multiplicité d'orifices de retenue, chacune d'entre elles étant normalement maintenue assise dans une rainure correspondante desdites rainures en V (83).

16. Dispositif de transmission de couple selon la revendication 15, caractérisé en ce que ledit dispositif de transmission de couple comprend en outre :

un ressort de sollicitation (85) interposé entre ledit moyeu de disques internes (80) et ledit manchon de transmission (81) afin de solliciter ledit manchon de transmission (81) vers ledit moyeu de disques internes (80) de manière à exercer une pression sur les disques d'embrayage internes et externes (38, 37).

17. Dispositif de transmission de couple selon la revendication 11, caractérisé en ce que :

ledit boîtier rotatif (32) est formé de manière à présenter une partie à nervures (89) avec laquelle s'engagent les parties circonférentielles desdits disques d'embrayage externes (37) ; et

ledit piston (36) est formé de manière à présenter, au niveau d'une partie formant bord circonférentiel située à proximité desdits disques d'embrayage externes et internes (37, 38), une partie à nervures correspondante (88) qui s'engage avec ladite partie à nervures (89) dudit boîtier rotatif.

18. Dispositif de transmission de couple selon la revendication 11, caractérisé en ce que : ledit dispositif de transmission de couple comprend en outre :

un piston interne (92) logé de manière étanche aux fluides dans ledit piston (36) et porté de manière étanche aux fluides par-dessus lesdits moyens formant arbre (68) pour définir une chambre à disques d'embrayage (96) dans laquelle est prévu ledit dispositif formant embrayage à disques multiples (40), ainsi que ledit piston (36), ledit boîtier rotatif (32) et lesdits moyens formant arbre (68) ; un lubrifiant remplissant ladite chambre à disques d'embrayage (96) ; et

des moyens formant ressort (93) interposés entre ledit piston (36) et ledit piston interne (92) de façon à maintenir ledit piston interne (92) normalement dans une position neutre d'une course suivant laquelle ledit piston interne (92) peut se déplacer à l'intérieur dudit piston (36).

19. Dispositif de transmission de couple selon la revendication 1, caractérisé en ce que ledit boîtier rotatif (32), ledit piston (36) et lesdits moyens formant arbre (68) définissent une chambre à disques d'embrayage (96) renfermant ledit dispositif formant embrayage à disques multiples (40), et en ce que ledit dispositif de transmission de couple comprend en outre :

un lubrifiant remplissant ladite chambre à disques d'embrayage (96) ; et

des moyens d'absorption prévus à l'intérieur de l'autre desdits premier et second arbres d'entraînement (12, 20) pour absorber la variation thermique du volume dudit lubrifiant.

20. Dispositif de transmission de couple selon la revendication 19, caractérisé en ce que lesdits moyens d'absorption comprennent :

un piston d'absorption (101) reçu à l'intérieur d'un orifice cylindrique (100) formé dans l'autre desdits premier et second arbres d'entraînement (12, 20) ; et

des moyens formant ressort (102) servant à solliciter ledit piston d'absorption (101) dans une direction mais à permettre le déplacement dudit piston d'absorption (101) dans l'autre direction lorsque le volume dudit lubrifiant augmente.

21. Dispositif de transmission de couple selon la revendication 19, caractérisé en ce que lesdits moyens d'absorption comprennent :

un diaphragme (107) prévu pour fermer une extrémité d'ouverture unique d'un orifice cylindrique (100) qui est formé dans l'autre desdits premier et second arbres d'entraînement (12, 20) et qui est en communication de fluide avec ladite chambre à disques d'embrayage (96).

# FIG . 1

FIG . 2

FIG . 3

16

FIG.4

FIG.5

# FIG . 6

# FIG . 7

FIG . 8

FIG. 9

FIG. 10

TRANSMISSIVE TORQUE T

Small Throttle Area

Large Throttle Area

ROTATIONAL SPEED DIFFERENCE ΔN

FIG. 11

FIG. 12

FIG. 13

FIG.14

71

41a

32

68

41

41b

71

FIG.15

72

XVI        XVI

41a

68

32

41

72

41b

FIG.16

72        41a        72

FIG.17

FIG.18

EP 0 283 821 B1

FIG.19

FIG.20

EP 0 283 821 B1

FIG. 21

FIG. 22

EP 0 283 821 B1

# FIG.23

FIG.24

FIG.25

27